# EUROPÄISCHE PATENTANMELDUNG

(11) **EP 1 571 254 A2**
(43) Veröffentlichungstag der Anmeldung: **07.09.2005**
(21) Anmeldenummer: 05000449.8
(22) Anmeldetag: 12.01.2005
(51) Int. Cl.: D06N 3/14

(54) **Verfahren zur Herstellung eines lichtechten Syntheseleders und danach hergestellte Produkte**

(30) Priorität: 01.03.2004 DE 102004010456
(71) Anmelder: Carl Freudenberg KG, 69469 Weinheim (DE)
(72) Erfinder: Mühlfeld, Horst, 64689 Grasellenbach (DE); Jestel, Frank, 68320 Kunheim (FR); Grtoen, Robert, 68280 Sundhoffen (FR); Schauber, Thomas, 69502 Hemsbach (DE); Jahn, Ulrich, 68910 Labaroche (FR)

(57) **Zusammenfassung**

Die Erfindung betrifft ein Verfahren zur Herstellung eines Syntheseleders, bei dem textile Flächenware mit einem Gemisch aus:
a) einer wässrigen Dispersion eines aus aliphatischen, zykloaliphatischen und/oder nicht aromatischen heterocyclischen Di- und/oder Tri-Isocyanaten und linearen, hydroxylterminierten Polyolen mit einer MolMasse von 500 bis 5000 g/mol erhaltenen Polyurethan-Prepolymer und
b) einer wässrigen Dispersion oder Lösung eines Katalysators und mindestens einer Vemetzerkomponente imprägniert und durch Trocknung sowie Ausreaktion der Prepolymeren bei Temperaturen von 80 bis 180°C erzeugt wird.

Die Erfindung betrifft weiterhin nach dem erfindungsgemäßen Verfahren erhaltener Produkte.

## Beschreibung

Die Erfindung betrifft ein Verfahren zur Herstellung eines lichtechten Syntheseleders und danach hergestellte Produkte.

Bei bereits bekannten synthetischen Ledern wird u.a. die Weichheit dadurch erzielt, dass die Oberfläche der Fasern des Vliesstoffes vor dem Imprägnieren mit Polyurethan(PU)-Lösungen ( PU gelöst in organischen Lösemitteln meist Dimethyl-formamid) mit kaltwasserlöslichem Polyvinylalkohol reserviert werden. Nach der Imprägnierung und der Koagulation des Polyurethans in Wasser wird der Polyvinylalkohol in den anschließenden Waschgängen zusammen mit dem organischen Lösungsmittel ausgewaschen. Es werden auch andere wasserlösliche Reservierungsmittel oder temporäre Füllstoffe wie z.B. Poly-ε-caprolacton, Carboxymethylcellulose oder Stärke eingesetzt.
Für die Applikation mit wässrigen Bindemitteln ist der Einsatz heißwasserlöslichem Polyvinylalkohol notwendig. Es ist auch schon beschrieben heißwasserlösliche PVA-Fasern direkt bei der Vliessherstellung einzuarbeiten. Das Herauslösen der heißwasserlöslichen Fasern kann gleichzeitig mit einer Ausziehfärbung insbesondere in Autoklaven vorgenommen werden.
Die Nachbehandlung der erhaltenen Syntheseleder erfolgt in bekannter Weise durch Anschleifen und Bürsten.

Diese oder ähnliche Verfahren sind in den nachfolgenden Dokumenten beschrieben:

Aus dem Dokument EP-A 0 090 397 sind synthetische Produkte mit lederähnlichen Eigenschaften bekannt, die aus Vliesstoffen mit einer Polyurethan-Imprägnierung und/oder Beschichtung hergestellt werden. Die Vliesstoffe aus ultrafeinen, verknäulten Filamenten weisen eine Schichtstruktur auf und werden aus Ausgangsfasern vom Typ Inseln-im-Meer hergestellt. Die Imprägnierung der Vliesstoffe erfolgt durch Koagulation einer aromatischen Polyurethan-DMF-Lösung im Wasserbad.

Im Dokument EP 1 353 006 werden mit Polyurethan imprägnierte Vliesstoffe beschrieben, die aus Zwei-Komponenten-Spinnfasern vom Typ Inseln-im-Meer hergestellt werden.
Die Imprägnierung wird mit wässrigen Polyurethanemulsionen und Polyurethanen in organischen Lösemittel nach folgenden Verfahren durchgeführt:
Koagulation in Säure- oder Salzlösungen,
Trocknung mit Mikrowelle oder Radiowellen,
Behandlung mit gesättigtem Dampf und Verdickungsmittel.

Aus dem Dokument DE-A 199 47 869 sind synthetische Leder bekannt, bei denen ein aus Splitfilamenten hergestellter Vliesstoff mit Polyurethanlösungen oder Dispersionen imprägniert wird. Die danach erhaltenen Produkte weisen noch Nachteile hinsichtlich der Lichtechtheit und der Haptik auf. Weiterhin sind aus den Dokumenten WO 01/27179 A1, US 6,017,997 und WO 02/08327 A1 Verfahren zur Herstellung wässriger Polyurethan-Prepolymere und deren Verwendung zur Imprägnierung von textilen Stoffen bekannt. Dabei werden wässrige Polyurethan-Prepolymerdispersionen mit einer Vernetzerkomponente zur Reaktion gebracht und anschließend eine Imprägnierung von Textilien insbesondere von Vliesstoffen vorgenommen. Einen Hinweis auf die Lichtechtheit oder die Haptik der danach hergestellten Produkte ist diesen Dokumenten nicht zu entnehmen.

Die Erfindung hat sich die Aufgabe gestellt, ein Verfahren zur Herstellung eines Syntheseleders und danach hergestellte Produkte anzugeben, die eine höhere Lichtechtheit und eine verbesserte Haptik, d.h., einen weicheren Griff aufweisen sowie in einem einfachen, kostengünstigen und umweltschonenden Verfahren herzustellen.

Erfindungsgemäß erfolgt das Verfahren in der Weise, dass textile Flächenware mit dem Gemisch aus:
a) einer wässrigen Dispersion eines aus aliphatischen, cycloaliphatischen und/oder nicht aromatischen heterocyclischen Di-und/oder Tri-Isocyanaten und linearen, hydroxylterminierten Polyolen mit einer Mol-Masse von 500 bis 5000 g/mol erhaltenen Polyurethan-Prepolymer und
b) einer wässrigen Dispersion oder Lösung eines Katalysators und mindestens einer Vernetzerkomponente imprägniert und durch Trocknung sowie Ausreaktion der Prepolymeren bei Temperaturen von 80 bis 180°C erzeugt wird.

Die Imprägnierung der Vliesstoffe erfolgt in einem einfachen Verfahrensschritt durch Tränkung der Vliesstoffe mit der reaktiven und mit dem Kettenverlängerer oder Vernetzer abgemischten Polyurethan-Prepolymer-Dispersion in einem nicht eigens dafür hergestellten Apparat, sondern in einem herkömmlichen Foulard und dem anschließenden Trockenprozess.

Überraschenderweise wurde gefunden, daß durch den einfachen und umweltschonenden Imprägnierschritt der erfindungsgemäßen Vliesstoffe mit reaktiven PU-Prepolymeren, die erst beim Trockenprozeß zu langkettigen und vernetzten Polyurethanen ausreagieren, weiche, lederähnliche Produkte erhalten werden. Die nach dem erfindungsgemäßen Verfahren erhaltenen Produkte weisen eine verbesserte Lichtechtheit und einen weicheren Griff auf.
Vorteilhafter Weise wird als textile Flächenware ein Vliesstoff eingesetzt.
Synthetische Leder sind heute fast ausschließlich aus mikrofaserhaltigen Textilien aufgebaut. Da Mikrofasern selbst nur mit sehr langsamen Produktionsgeschwindigkeiten zu Textilien zu verarbeiten sind, werden meist Mehrkomponenten-Fasern eingesetzt. Es gibt verschiedene Typen von Mehrkomponenten-Fasern wie z.B. Matrix-Fibrillen-Fasern (island-in-sea) oder solche Fasern deren Querschnitte beispielsweise eine Orangenstruktur oder eine Kuchen- bzw. Hohlkuchenstruktur aufweisen. Solche conjugate fibres bzw. multiconstituent fibres sind aus mindestens zwei, vorzugsweise jedoch bis ca. 18 Segmenten. Die Segmente der meist zwei Polymere wechseln innerhalb der Mehrkomponenten-Faser einander ab, so dass sich zwischen den Segmenten Fasergrenzflächen, wie z.B. Polyethylenterephthalat / Polyamid 6 ausbilden. Für die Trennung solcher Mehrkomponentenfaser zu isolierten Microfasern gibt es unterschiedliche Verfahren. So wird beispielsweise eine der beiden Faserkomponenten mit organischen Lösungsmitteln oder wie im Falle von Polyethylenterephthalat / Polyamid 6 wird die Polyester alkalisch verseift, so dass die andere unlösliche Faserkomponente als Mikrofaser zurückbleibt. Diese Methoden sind aufwendig, wenig umweltfreundlich und mit einem hohen Materialverlust verbunden.

Besonders bevorzugt wird ein Vliesstoff bestehend aus Mikrofilamenten mit einem Titer von < 0,5 dtex, vorzugsweise zwischen 0,01 und 0.2 dtex eingesetzt. Solche Vliesstoffe werden aus Multikomponenten Filamenten hergestellt, die alternierend der im Querschnitt betrachteten Multikomponenten Filamente angeordnet sind, wobei die einzelnen Komponenten Grenzflächen ausbilden, entlang derer, beispielsweise durch eine Hydrofluidbehandlung, eine Aufspaltung in einzelne Mikrofilamente vorgenommen wird. Umweltfreundlicher ist die heute bevorzugte Splittung der Fasern mit Hochdruckwasserstrahlen. Die hierfür geeigneten Bikomponentenfasern sind entweder aus chemisch stark unterschiedlichen Thermoplasten mit nur geringen Adhäsionskräften an den Grenzflächen oder bei chemisch ähnlichen Faserpolymeren wie z.B. Polyolefinen mit dehäsiven Additiven versetzt.

Das erfindungsgemäße Verfahren wird weitergebildet dadurch, dass Wasser als Vernetzerkomponente eingesetzt wird, wobei die Dispersion B nur aus Wasser und einem Katalysator besteht. Die alleinige Verwendung von Wasser als Vernetzungskomponente führt schon zu Produkten, die gegenüber der Imprägnierung mit ausreagierten Polyurethanen Lösungen oder Dispersionen eine höhere Lichtechtheit und einen weicheren Griff aufweisen.

Alternativ dazu wird als Vernetzerkomponente in der Dispersion B ein aliphatisches Diol, Triol, Tetrol und/oder ein Aminoalkohol mit Molekulargewichten zwischen 60 und 400 g/mol eingesetzt. Vorteilhafterweise wird das Verhältnis der freien Isocyanatgruppen des Polyurethan-Prepolymers in der Dispersion A zu den freien Hydroxyl- und Aminogruppen der Di-, Tri- und Tetrole sowie Aminoalkohole in der Dispersion B) im Bereich 0,9 zu 1,0 bis 1,8 zu 1,0 gewählt.

Vorteilhafterweise wird als weitere Alternative Hexamethylen-Dicarbamat als Vernetzerkomponente in der Dispersion b) eingesetzt. Bei der Verwendung dieses Vernetzers werden nach der Ausreaktion der Prepolymeren und einer Temperaturbehandlung im Bereich von 90° bis 160°C geschäumte Produkte erhalten.

Eine weitere Ausgestaltung des erfindungsgemäßen Verfahrens besteht darin, dass die Vorpolymerisation zur Herstellung des Polyurethan-Prepolymers bei Temperaturen von 120 bis 180°C erfolgt, dass Polyurethan-Prepolymer bei einer Temperatur < 80°C mit 0,8 bis 10 Gewichtsteilen eines Emulgators auf 100 Gew.Teilen Polyurethan-Prepolymer gemischt und in deionisiertem Wasser dispergiert wird. Für die Herstellung der erfindungsgemäßen Prepolymere kommen beispielweise aliphatische, cycloaliphatische und heterocyclische Diisocyanate in Betracht. Im Einzelnen seien beispielhaft genannt: Hexamethylendiisocyanat, Isophorondüsocyanat, 1,4-Cyclohexandiisocyanat, 1-Methyl-2,4-cyclohexan-diisocyanat, 1-Methyl-2,6-cyclohexan-diisocyanat, 4,4-Dicyclohexylmethandiisocyanat, 2,4-Dicyclohexylmethandiisocyanat, 2,2-Dicyclohexylmethandiisocyanat sowie deren Isomerengemische. Die genannten Diisocyanate können einzeln oder in Form von Mischungen untereinander zur Anwendung kommen. Sie können auch zusammen mit aliphatischen Triisocyanaten und Polyisocyanaten verwendet werden. Geeignet sind beispielsweise die Trimerisate und Kondensate von Hexamethylendiisocyanat mit Biuret-Struktur. Es darf aber höchstens soviel Triisocyanat und Polyisocyanat zugesetzt werden, daß ein noch flüssiges oder aufschmelzbares Prepolymer für die Dispergierung in Wasser erhalten wird.

Als Polyole für die Herstellung der Prepolymere werden bevorzugt lineare hydroxylterminierte Polyole mit einem mittleren Molekulargewicht von 500 bis 5000 g/mol eingesetzt.
Vorzugsweise werden Polyester-, Polyether-, Polycarbonat- und Polysiloxan-Diole oder Gemische aus diesen verwendet.
Geeignete Polyether-Polyole sind die Reaktionsprodukte, die aus den Alkylenoxiden Ethylenoxid, Propylenoxid und Butylenoxyd erhalten werden.
Geeignete Polyetherole sind ferner die hydroxylgruppenhaltigen Polymerisationsprodukte des Tetrahydrofurans.
Als Polyester-Diole werden vorzugsweise Ethandiol-Polyadipate, Butandiol-Polyadipate, Ethandiol-Butandiol-Polyadipate, Hexandiol-Polyadipate, Hexandiol-Neopentylglykol- Polyadipate, Hexandiol-Butandiol-Polyadipate und Polycaprolactone verwendet.

Als Kettenverlängerer und Vernetzer der Prepolymere werden Wasser, aliphatische Diole, Triole und Tetrole sowie aliphatische und cycloaliphatische Aminoalkohole und Diamine mit blockierten NH-Gruppen mit einem Molekulargewicht von 60 bis 400 g/mol eingesetzt.
Geeignet sind beispielsweise die hydroxylgruppenhaltige (OH-funktionelle) Kettenverlängerer und Vernetzer Wasser, Ethandiol, Butandiol, Hexandiol, Diethylenglykol, Dipropylenglykol, Cyclohexandiol, Bis(hydroxymethyl)-cyclohexan, Trimethylolpropan, Pentaerythrit, Di-Trimethylolpropan, DiPentaerythrit.
Als NH-funktioneller Kettenverlängerer werden vorzugsweise Mono-, Di- und Triethanolamin, Aminoethylethanolamin, Aminopropanol, Neopentanolamin und Hexamethylendiamin-Carbamat verwendet.
Es können auch Gemische der oben genannten Kettenverlängerer und Vernetzer eingesetzt werden.
Für die Dispergierung in Wasser wird das Prepolymers unterhalb von 80°C, bevorzugt auf 20 bis 50°C abgekühlt und mit dem Emulgator gemischt, wobei die Emulgatormenge bezogen auf 100 Gewichtsteile Prepolymer 0,8 bis 10,0 Gewichtsteile, bevorzugt 2,0 bis 5,0 Gewichtsteile beträgt.
Die Dispergierung der Prepolymere in Wasser kann diskontinuierlich oder auch kontinuierlich durchgeführt werden.
Im diskontinuierlichen Prozess wird unter hochtourigem Rühren mit einer Dispergierscheibe der Prepolymer-Emulgator-Mischung langsam Wasser zugesetzt. Auf 100 Gewichtsteile Prepolymer werden 100 bis 1000 Gewichtsteile Wasser, bevorzugt 150 bis 400 Gewichtsteile Wasser zugesetzt.
In einem kontinuierlichen Prozess wird das Prepolymer in einem Aggregat über einen Mischkopf, der mit einem hochtourigen Stachelrührer ausgerüstet ist, mit dem Emulgator gemischt. Diese Mischung wird anschließend in einer Dispergiermühle unter gleichzeitiger Zugabe der entsprechenden Wassermenge zu einer reaktiven und über 24 Stunden lagerstabilen PU-Dispersion verarbeitet.

In einem weiteren Herstellungsschritt wird der wässrigen PU-Dispersion der Kettenverlängerer und/oder Vernetzer, der in Wasser gelöst oder in Wasser dispergiert wurde, in solchen Mengen zugesetzt, daß das Äquivalensverhältnis der freien NCO-Gruppen im Prepolymer zur Summe der OH-Gruppen und NH₂-Gruppen der Kettenverlängerer und Vernetzer 0,9 : 1,0 bis 1,8 : 1,0, vorzugsweise 0,95 : 1,0 bis 1,3 : 1,0 beträgt. Die Komponenten werden unter Rühren bei einer Temperatur oberhalb 100°C, bevorzugt zwischen 120° und 140°C umgesetzt.

Für die Kettenverlängerung des Prepolymeren mit Wasser zu einem Polyurethan-Polyharnstoff wird der Prepolymer-Dispersion nur ein Katalysator, bevorzugt ein tertiäres Amin zugesetzt.

Die Zusatzstoffe und Hilfsmittel können dem Prepolymer vor der Dispergierung durch Einmischen und/oder der PU-Dispersion durch vorheriges Lösen oder Dispergieren in Wasser zugesetzt werden.

Die Imprägnierung des Vliesstoffes wird bei Raumtemperatur durchgeführt, wobei für die Tränkung des Vliesstoffes solche Mengen an PU-Dispersion gewählt werden, daß nach der Trocknung und Nachreaktion die Syntheseleder einen PU-Anteil von 5 bis 75, vorzugsweise 15 bis 40 Gewichtsprozent enthalten. Vor der Trocknung und Polymerisierung kann auch eine Behandlung im einem Dämpfer erfolgen.
Die Temperung der imprägnierten Vliesstoffe für die Trocknung und Nachreaktion der PU-Prepolymere erfolgt in einem Temperaturbereich von 80° bis 180°C, vorzugsweise bei 100° bis 140°C. Für die Trocknung kommen neben herkömmlichen Konvektions- und IR-Trockner auch Mikrowellentrockner in Frage.

Das Imprägnierverfahren kann diskontinuierlich oder kontinuierlich erfolgen. Im diskontinuierlichen Prozeß werden die erfindungsgemäßen Vliesstoffe mit der erfindungsgemäßen PU-Prepolymer-Dispersion getränkt, die überschüssige Dispersion wird abgepreßt und anschließend wird der imprägnierte Vliesstoff unter den oben beschriebenen Bedingungen für die Trocknung und Nachreaktion nachbehandelt.
Beim kontinuierlichen Verfahren wird die Imprägnierung des Vliesstoffes nach dem Stand der Technik bekannten Verfahren in einem Foulard durchgeführt und die Temperung für die Trocknung des Vliesstoffes und Nachreaktion der PU-Prepolymere erfolgt in einem Heizkanal.
Eine nachträgliche Färbung der so behandelten Vliesstoffe erfolgt nach den bekannten Färbeverfahren in den bekannten Färbeaggregaten, bevorzugt diskontinuierlich in einem Jet-Färbeaggregat.

Die erfindungsgemäßen Syntheseleder erhalten durch Anschleifen und/oder Rauhen sowie Bürsten der Oberfläche einen velourlederähnlichen Griff.
Die erfindungsgemäßen Syntheseleder können zum Beispiel durch Oberflächenbehandlung zur Lackierung und Beschichtung mit den nach dem Stand der Technik bekannten Polymersystemen und Verfahrenstechniken für die speziellen Anwendungen ausgerüstet werden.

Die erfindungsgemäßen Syntheseleder sind insbesondere durch ihre lederähnliche Haptik, hohe Lichtechtheit, guten Festigkeitseigenschaften und gutes Abriebverhalten für die Anwendung als Syntheseleder im Automobilinnenbereich, Polsterbereich und für hochwertige Bekleidungsartikel geeignet.

Die Art des Emulgators - anionisch, kationisch oder nicht ionisch - wird in Abhängigkeit von der Natur des Polyurethan-Prepolymer gewählt. Für die Dispergierung der aliphatischen PU-Prepolymere in Wasser sind anionische, kationische und nichtionische Emulgatoren geeignet. Vorzugsweise werden Emulgatoren mit einem hohen Anteil an hydrophilen Gruppen verwendet, die zur Herstellung von Öl-in-Wasser-Emulsionen geeignet sind. Geeignet sind beispielsweise Ölsäureethoxilat, Fettalkoholethoxilat, Rizinusölethoxilat, Alkylphenolethoxilat.

Vorteilhafterweise wird das Äquivalenzverhältnis der Isocyanatgruppen zu den Hydroxylgruppen bei der Herstellung des Polyurethan-Prepolymers im Bereich von 1,2 zu 1,0 bis 4,5 zu 1,0 gewählt. Die PU-Prepolymere sind erhältlich aus den obengenannten Polyolen und Diisocyanaten, gegebenenfalls in Gegenwart von Katalysatoren. Dadurch werden Polyurethan-Prepolymere erhalten, die noch freie, d.h. reaktive Isocyanat-Endgruppen aufweisen für die anschließende Vernetzungsreaktion und Bildung eines Polyurethans.

Besonders bevorzugt werden als Polyol-Komponente zur Herstellung des Polyurethan-Prepolymers lineare, hydroxylterminierte Polyole ausgewählt aus der Gruppe Polyester-, Polyether-, Polycarbonat- und Polysiloxan-Diole sowie deren Gemische eingesetzt.

In einer Weiterbildung des Verfahrens können zur Blockierung der freien Isocyanatgruppen im Polyurethan-Prepolymer Diethylmalonat, Dimethylpyrazol, Methylethylketoxim, Caprolactam eingesetzt werden.

Vorteilhafterweise werden dem Polyurethan-Prepolymer der Dispersion a) und/oder der Dispersion b) Flammschutzmittel, Farbstoffe, Pigmente, Füllstoffe, Treibmittel und/oder Weichmacher zugesetzt werden. Weitere Zusätze, die in der PU-Dispersion enthalten sein können, sind Treibmittel, die bei erhöhter Temperatur durch Gasabspaltung im imprägnierten Vliesstoff eine Schaumstruktur bewirken. Geeignet sind auch Mikropartikel, die mit Treibgas gefüllt sind und die durch Temperatureinwirkung zu Mikrokugeln mit einer Polymerschale expandieren.
Weiterhin sind zur Einarbeitung handelsübliche Weichmacher wie Phosphate, Adipate, Sebacate und Alkylsulfonsäureester geeignet.

Besonders bevorzugt wird das Verfahren in der Weise durchgeführt, dass für die Prepolymerreaktion sowie für die Vernetzungsreaktion Katalysatoren wie tertiäre Amine und/oder organische Metallverbindungen eingesetzt werden. Die Erfindung betrifft letztlich Syntheseleder die nach dem erfindungsgemäßen Verfahren erhalten werden. Vorteilhafterweise werden die erfindungsgemäßen Syntheseleder einer Nachbehandlung durch Spalten, Buffen, Sanforisieren und/oder Färben unterzogen.

Die erfindungsgemäßen Syntheseleder erhalten durch Anschleifen und/oder Rauhen sowie Bürsten der Oberfläche einen velourlederähnlichen Griff.
Die erfindungsgemäßen Syntheseleder können zum Beispiel durch Oberflächenbehandlung zur Lackierung und Beschichtung mit den nach dem Stand der Technik bekannten Polymersystemen und Verfahrenstechniken für die speziellen Anwendungen ausgerüstet werden.

Die erfindungsgemäßen Syntheseleder sind insbesondere durch ihre lederähnliche Haptik, hohe Lichtechtheit, guten Festigkeitseigenschaften und gutes Abriebverhalten für die Anwendung als Syntheseleder im Automobilinnenbereich, Polsterbereich und für hochwertige Bekleidungsartikel geeignet.

Die Erfindung soll anhand der nachfolgenden Beispiele näher erläutert werden.

### Beispiel 1

Aus einem Polyester-Polyamid-Bikomponenten-Endlosfilament wird ein Filamentflor mit einem Flächengewicht von 175 g/m² hergestellt und einer Wasserstrahlvernadelung unterzogen. Die Bikomponenten-Endlosfilamente weisen nach der Wasserstrahlvernadelung, die zu einer gleichzeitigen Splittung der Ausgangsfilamente führt, einen Titer < 0,2 dtex auf. Für die Imprägnierung des verfestigten Vliesstoffes wird eine reaktive PU-Dispersion in folgender Zusammensetzung und nach folgendem Verfahren hergestellt:
400,00 Gew.-Teile Polypropylenglykol mit einem MG 2000 g/mol und der OH-Zahl 58
600,00 Gew.-Teile Polytetrahydrofuran, MG 2000 g/mol und der OH-Zahl 56 220,00 Gew.-Teile Isophorondiisocyanat
werden in einem Reaktor unter intensivem Rühren in drei Stunden bei 120°C zu einem Prepolymer mit einem Isocyanat-Restgehalt von 3,02% umgesetzt.
Das Prepolymer wird auf Raumtemperatur abgekühlt und mit einem Emulgator mit anionischem und nichtionischem Anteil auf Basis eines Fettalkoholethoxilats in einem Anteil von 3,5 Gewichtsteilen bezogen auf 100 Gewichtsteile Prepolymer gemischt.
Für die Dispergierung des Prepolymeren in Wasser wird unter hochtourigem Rühren mit einer Dispergierscheibe der Prepolymer-Emulgator-Mischung langsam Wasser in Anteilen von 400 Gewichtsteilen bezogen auf 100 Gewichtsteile Prepolymer zugesetzt.
Es wird eine über 2 Tage lagerstabile PU-Dispersion erhalten.
In einem weiteren Verfahrensschritt werden 500 Gewichtsteile der oben beschriebenen PU-Prepolymer-Dispersion 54,28 Gewichtsteile der Vernetzer-Lösung bestehend aus 4,28 Gewichtsteilen Di-Trimethylolpropan mit einem MG 250 g/mol und der OH-Zahl 900 und 50,0 Gewichtsteilen Wasser, die vorher durch Lösen von Di-Trimethylolproan in erwärmten Wasser hergestellt wurde, unter Rühren zugesetzt.

Die Imprägnierung des oben beschriebenen Vliesstoffes mit der reaktiven PU-Dispersion erfolgt in einem Foulard, in dem der Vliesstoff mit der PU-Dispersion getränkt und anschließend die überschüssige Dispersion zwischen 2 Walzen unter einem Pressdruck von 5 bar abgepreßt wird.
Der imprägnierte Vliesstoff wird in einem Heizofen 4 Minuten bei 120°C für die Trocknung des Vliesstoffes und Nachvernetzung des Prepolymeren getempert.
Es wird ein Vliesstoff mit einer weichen, hochvernetzten PU-Polymerimprägnierung erhalten, wobei die PU-Imprägnierung 28 % des Ausgangsgewichts des Vliesstoffes beträgt.
Der mit dem hochvernetzten PU imprägnierten Vliesstoff wird oberflächig angeschliffen und kann beispielsweise zur Griffsverbesserung mit einem speziellen Silikon ausgerüstet werden. Es wird ein weiches synthetisches Leder mit einer nubukartigen Oberfläche erhalten.

### Beispiel 2

Der im Beispiel 1 beschriebenen reaktiven Prepolymerdispersion ohne Vernetzerkomponente wird der Katalysator Triethylendiamin in einem Anteil von 0,05 Gewichtsteilen bezogen auf 100 Gewichtsteile Prepolymer als wässrige Lösung zugesetzt.
Die Imprägnierung des im Beispiel 1 beschriebenen Vliesstoffes wird im Foulard unter den Bedingungen wie bei Beispiel 1 durchgeführt.
Der imprägnierte und feuchte Vliesstoff wird zwischen zwei Pressplatten in einem seitlich abgedichteten Pressrahmen unter geringem Druck bei 110°C 5 Minuten behandelt. Anschließend wird der noch feuchte Vliesstoff bei 80°C getrocknet.
Es wird ein Syntheseleder mit einer weichen geschäumten und mikrozelligen PU-Imprägnierung erhalten, wobei die PU-Imprägnierung 22 % des Ausgangsgewichts des Vliesstoffes beträgt. Eine Oberflächenbehandlung kann wie im Beispiel 1 durchgeführt werden.

### Beispiel 3

Der im Beispiel 1 beschriebene Vliesstoff wird mit einer reaktiven PU-Dispersion in folgender Zusammensetzung und nach folgendem Verfahren imprägniert:
650,00 Gew.-Teile Polycarbonatdiol mit einem MG 2000 g/mol und der OH-Zahl 54,
350,00 Gew.-Teile Polypropylenglykol, MG 2000 g/mol und der OH-Zahl 58,
280,00 Gew.-Teile Dicyclohexylmethandiisocyanat mit MG 262 g/mol werden in einem Reaktor unter intensivem Rühren in drei Stunden bei 120°C zu einem Prepolymer mit einem Isocyanat-Restgehalt von 3,58 % umgesetzt.
Das Prepolymer wird analog dem Beispiel 1 bei Raumtemperatur mit einem Emulgator auf Fettalkoholethoxilat-Basis gemischt und in Wasser unter hochtourigem Rühren mit Hilfe einer Dispergierscheibe zu einer über 2 Tage lagerstabilen PU-Dispersion dispergiert.
Der Dispersion wird Trimethylolpropan, das vorher in Wasser gelöst wurde, in Anteilen von 3,65 Gewichtsteilen bezogen auf 100 Gewichtsteile Prepolymer zugesetzt.
Die Imprägnierung des Vliesstoffes, Trocknung und Nachvernetzung des Prepolymeren wird analog den Bedingungen wie im Beispiel beschrieben durchgeführt.
Es wird ein Syntheseleder mit einer weichen, hochvernetzten PU-Imprägnierung erhalten, wobei die PU-Imprägnierung 29 % des Ausgangsgewichts des Vliesstoffes beträgt. Das Syntheseleder unterscheidet sich insbesondere von dem Syntheseleder aus Beispiel 1 nach dem Anschleifen der Oberfläche in der Haptik durch einen besonders trockenen Griff und einer guten Abriebbeständigkeit.

### Beispiel 4

Der im Beispiel 1 beschriebene Vliesstoff wird mit einer reaktiven PU-Dispersion in folgender Zusammensetzung und nach folgendem Verfahren imprägniert:
600,00 Gew.-Teile Polycarbonatdiol mit einem MG 2000 g/mol und der OH-Zahl 54,
400,00 Gew.-Teile Polypropylenglykol, MG 2000 g/mol und der OH-Zahl 58,
180,00 Gew.-Teile Isophorondiisocyanat mit MG 222 g/mol,
20,00 Gew.-Teile Trimerisat auf Basis Hexamethylendiisocyanat mit MG 504 g/mol
werden in einem Reaktor unter intensivem Rühren in drei Stunden bei 120°C zu einem Prepolymer mit einem Isocyanat-Restgehalt von 2,41 % umgesetzt, wobei die Polyole in einer Vorreaktion mit Isophorondiisocyanat in 2,5 Stunden bei 120°C umgesetzt werden und anschließend das Triisocyanat zugesetzt und die Mischung noch 0,5 Stunden bei 120°C gerührt wird.
Das Prepolymer wird analog dem Beispiel 1 bei Raumtemperatur mit einem nichtionischen Emulgator auf Rizinusölethoxilat-Basis gemischt und in Wasser unter hochtourigem Rühren mit Hilfe einer Dispergierscheibe zu einer über 2 Tage lagerstabilen PU-Dispersion dispergiert.
Der Dispersion wird Hexamethylendiamin-Carbamat, das vorher unter hochtourigem Rühren mit dem nichtionischen Emulgator auf Rizinusölethoxilat-Basis in Wasser dispergiert wurde, in Anteilen von 4,39 Gewichtsteilen bezogen auf 100 Gewichtsteile Prepolymer zugesetzt.
Die Imprägnierung des Vliesstoffes, Trocknung und Nachvernetzung des Prepolymeren wird analog den Bedingungen wie im Beispiel beschrieben durchgeführt.

Es wird aufgrund der Reaktion des Prepolymeren mit dem Diamin-Carbamat, die in der Wärme durch Aufspaltung des Diamin-Carbamats in Hexamethylendiamin und CO₂ zu einer Kettenverlängerung und einem Treibprozess führt, ein Syntheseleder mit einer weichen geschäumten und mikrozelligen PU-Imprägnierung erhalten, wobei die PU-Imprägnierung 24 % des Ausgangsgewichts des Vliesstoffes beträgt. Die Oberfläche des Syntheseleders kann wie im Beispiel 1 beschrieben hinsichtlich Griffsverbesserung und nubukartiger Struktur nachbehandelt werden.

Vergleichsbeispiel

Die am Markt verfügbaren langkettigen PU-Dispersionen, die keine freien Isocyanatgruppen für eine OH- und Amin-Vernetzung enthalten, wie die Witcobond-Systeme der Fa. Baxender Chemicals, Astacin Finish-Systeme der BASF und der Impranil-Systeme der Fa. Bayer wurden zur Imprägnierung des Vliesstoffes von Beispiel 1 und nach dem Verfahren wie in Beispiel 1 beschriebenen eingesetzt.
Es wurde mit allen untersuchten PU-Dispersionen zur Imprägnierung des Vliesstoffes harte und steife Produkte erhalten, die auch nach dem Anschleifen der Oberfläche keine lederähnlichen Charakter zeigten. Auch wurde eine deutlich schlechtere Nassfestigkeit der imprägnierten Vliesstoffe gegenüber den erfindungsgemäßen Syntheseleder festgestellt.

### Prüfungen an den in den Beispielen erhaltenen Syntheseleder:

**Zugversuch DIN EN 29073-03:** Prüfung der Höchstzugkraft und Höchstzugkraftdehnung bei 50 mm Probenbreite

**Abriebfestigkeit nach Martindale**, DIN 53863, 50 000 Zyklen bei einem Pressdruck von 9 Kpa

**Heißlichtechtheit,** DIN 75202-2B, bei 110°C und 5 Zyklen, Bewertung der Lichtechtheitsstufe nach dem Graumaßstab

| **Prüfergebnisse** | | | | | | |
|---|---|---|---|---|---|---|
| Synthese-leder | Höchstzugkraft (N) | | Höchstzugkraft-dehnung (%) | | Abriebfestigkeit nach Martindale 50000 Z. / 9 KPa | Heißlichtechtheit 110°C/5 Zyklen Lichtechtheitsstuf e |
| Beispiel 1 | längs | 544 | längs | 32 | keine Lochbildung | 5 |
| | quer | 531 | quer | 35 | | |
| Beispiel 2 | längs | 482 | längs | 31 | keine Lochbildung | 5 |
| | quer | 473 | quer | 33 | | |
| Beispiel 3 | längs | 548 | längs | 36 | keine Lochbildung | 5 |
| | quer | 542 | quer | 35 | | |
| Beispiel 4 | längs | 498 | längs | 33 | keine Lochbildung | 4-5 |
| | quer | 482 | quer | 32 | | |
| Beispiel 5 | | | | | | |
| Aliphatische | längs | 480 - 535 | längs | 30 - 35 | Lochbildung | 4 bis 4-5 |
| Dispersionen | quer | 475 - 540 | quer | 30 - 34 | | |
| Aromatische Dispersionen | längs | 495 - 545 | längs | 30 - 36 | keine Lochbildung | 2-3 bis 3-4 |
| | quer | 480 - 540 | quer | 30 - 36 | | |

## Patentansprüche

1. Verfahren zur Herstellung eines Syntheseleders, **dadurch gekennzeichnet, dass** textile Flächenware mit einem Gemisch aus:
A) einer wässrigen Dispersion eines aus aliphatischen, cycloaliphatischen und/oder nichtaromatischen heterocyclischen Di- und /oder Triisocyanaten und linearen, hydroxylterminierten Polyolen mit Molmassen von 500 bis 5000 g/mol erhaltenen Polyurethan-Prepolymer und
B) einer wässrigen Dispersion oder wässrigen Lösung eines Katalysators und mindestens einer Vernetzerkomponente imprägniert und durch Trocknung sowie Ausreaktion der Prepolymeren bei Temperaturen von 80 bis 180°C erzeugt wird.

2. Verfahren nach Anspruch 1, **dadurch gekennzeichnet, dass** ein Vliesstoff eingesetzt wird.

3. Verfahren nach Anspruch 2, **dadurch gekennzeichnet, dass** ein Vliesstoff bestehend aus Mikrofilamenten mit einem Titer von < 0,5 dtex, vorzugsweise zwischen 0,01 und 0,2 dtex, eingesetzt wird.

4. Verfahren nach Anspruch 1 bis 3, **dadurch gekennzeichnet, dass** Wasser als Vernetzerkomponente eingesetzt wird, wobei die Dispersion B nur aus Wasser und einem Katalysator besteht.

5. Verfahren nach Anspruch 1 bis 3, **dadurch gekennzeichnet, dass** als Vernetzterkomponente in der Dispersion B) ein aliphatisches Diol, Triol und/oder Tetrol mit Molekulargewichten zwischen 60 und 400 g/mol eingesetzt wird.

6. Verfahren nach Anspruch 5, **dadurch gekennzeichnet, dass** das Verhältnis der freien Isocyanatgruppen des Polyurethan-Prepolymers in der Dispersion A) zu den freien Hydroxylgruppen der Di-, Tri- und/oder Tetrole in der Dispersion B) im Bereich von 0,9 : 1,0 bis 1,8 : 1,0 gewählt wird.

7. Verfahren nach Anspruch 1 bis 3, **dadurch gekennzeichnet, dass** als Vernetzerkomponente in der Dispersion B)ein aliphatischer Aminoalkohol und/oder Hexamethylendiamin-Carbamat eingesetzt wird.

8. Verfahren nach Anspruch 1 bis 3, **dadurch gekennzeichnet, dass** die Vorpolymerisation zur Herstellung des Polyurethan-Prepolymers bei Temperaturen von 80 bis 140°C erfolgt, das Polyurethan-Prepolymer bei einer Temperatur kleiner 80°C mit 0,8 bis 10,0 Gewichtsteilen Emulgators auf 100 Gewichtsteile Polyurethan-Prepolymer vermischt und in deionisierten Wasser dispergiert wird.

9. Verfahren nach Anspruch 8, **dadurch gekennzeichnet, dass** das Äquivalenzverhältnis der Isocyanatgruppen zu den Hydroxylgruppen bei der Herstellung des Polyurethan-Prepolymers im Bereich von 1,2 : 1,0 bis 4,5 : 1,0 gewählt wird.

10. Verfahren nach Anspruch 8, **dadurch gekennzeichnet, dass** als Polyolkomponente zur Herstellung des Polyurethan-Prepolymers lineare, hydroxylterminierte Polyole ausgewählt aus der Gruppe Polyester-, Polyether-, Polycarbonat- und Polysiloxan-Diole sowie deren Gemische eingesetzt werden.

11. Verfahren nach Anspruch 8 bis 10, **dadurch gekennzeichnet, dass** zur Blockierung der Isocyanatgruppen im Polyurethan-Prepolymer Methylethylketoxim und/oder Caprolactam eingesetzt werden.

12. Verfahren nach Anspruch 1 bis 11, **dadurch gekennzeichnet, dass** dem Polyurethan-Prepolymer, der Dispersion A und/oder der Dispersion B Flammschutzmittel, Farbstoffe, Pigmente, Füllstoffe, Treibmittel und /oder Weichmacher zugesetzt werden.

13. Verfahren nach Anspruch 1 bis 12, **dadurch gekennzeichnet, dass** für die Prepolymerreaktion sowie für die Vernetzungsreaktion Katalysatoren wie tertiäre Amine und/oder organische Metallverbindungen eingesetzt werden.

14. Syntheseleder nach Anspruch 1 bis 13, **dadurch gekennzeichnet, dass** es nach einem dieser Verfahren erhalten wird.

15. Syntheseleder nach Anspruch 14, **dadurch gekennzeichnet, daß** es einer Nachbehandlung durch Schleifen, Buffen, Sanforisieren und/oder Färben unterzogen wird.
